# EUROPEAN PATENT APPLICATION

(11) **EP 4 848 091 A1**
(43) Date of publication of application: **02.12.2026**
(21) Application number: 26165638.3
(22) Date of filing: 18.03.2026
(51) Int. Cl.: G06F 11/14, G06F 3/06, G06F 11/1446, G06F 12/02

(54) **ELECTRONIC APPARATUS AND DATA RESTORATION METHOD CAPABLE OF SUPPRESSING EXECUTION OF CONTROL DIFFERENT FROM ORIGINAL CONTROL AND SUPPRESSING EXCESSIVE LOSS OF OPPORTUNITIES TO RESTORE CONTROL DATA**

(30) Priority: 31.03.2025 JP 2025058059
(71) Applicant: KYOCERA Document Solutions Inc., Osaka-shi, Osaka 540-8585 (JP)
(72) Inventor: Ikeda, Yuta, Osaka-shi, 540-8585 (JP)
(74) Representative: Plougmann Vingtoft a/s

(57) **Abstract**

An electronic apparatus includes a storage processing portion, a determination processing portion, and a restoration processing portion. The storage processing portion stores backup data including control data read from a volatile memory portion in an unused storage portion among a plurality of storage portions provided in a sector of a flash memory each time a backup timing arrives. The determination processing portion determines, for each of the storage portions, whether data read from the storage portion is invariant when power supply to the memory portion is started. The restoration processing portion restores the control data, based on data read from any of the storage portions for which read data has been determined to be invariant.

## Description

### BACKGROUND

The present disclosure relates to an electronic apparatus and a data restoration method.

An electronic apparatus having a backup memory is known.

Further, there is known an electronic apparatus that, upon starting power supply to a volatile memory portion such as a RAM, restores control data lost when the power supply to the memory portion was stopped immediately before, based on data backed up in a flash memory in advance.

For example, the electronic apparatus of this type includes a storage processing portion, an erasure processing portion, and a restoration processing portion. Each time a predetermined backup timing arrives, the storage processing portion stores backup data including the control data read from the memory portion in an unused storage portion among a plurality of storage portions provided in a predetermined sector of the flash memory. When all of the storage portions in the sector are used storage portions, the erasure processing portion erases the data in the sector. When power supply to the memory portion is started, the restoration processing portion restores the control data lost when the power supply to the memory portion is stopped immediately before, based on the data read from the sector.

### SUMMARY

An electronic apparatus according to one aspect of the present disclosure includes a storage processing portion, an erasure processing portion, a determination processing portion, and a restoration processing portion. The storage processing portion stores backup data including control data read from a volatile memory portion in an unused storage portion among a plurality of storage portions provided in a predetermined sector of a flash memory each time a predetermined backup timing arrives. The erasure processing portion erases data in the sector when all of the storage portions in the sector are used storage portions. The determination processing portion determines, for each of the storage portions, whether data read from the storage portion is invariant when power supply to the memory portion is started. The restoration processing portion restores the control data which was lost when the power supply to the memory portion was stopped immediately before, based on data read from any of the storage portions for which read data has been determined to be invariant by the determination processing portion.

A data restoration method according to another aspect of the present disclosure is executed by an electronic apparatus including: a storage processing portion configured to store backup data including control data read from a volatile memory portion in an unused storage portion among a plurality of storage portions provided in a predetermined sector of a flash memory each time a predetermined backup timing arrives; and an erasure processing portion configured to erase data in the sector when all of the storage portions in the sector are used storage portions, and comprises a determination step and a restoration step. In the determination step, for each of the storage portions, whether data read from the storage portion is invariant is determined when power supply to the memory portion is started. In the restoration step, the control data which was lost when the power supply to the memory portion was stopped immediately before is restored based on data read from any of the storage portions for which read data has been determined to be invariant in the determination step.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a system configuration of an image forming apparatus according to an embodiment of the present disclosure.
FIG. 2 is a diagram showing a configuration of a NOR flash memory of the image forming apparatus according to the embodiment of the present disclosure.
FIG. 3 is a flowchart showing an example of backup control processing executed in the image forming apparatus according to the embodiment of the present disclosure.
FIG. 4 is a flowchart showing an example of data restoration processing executed in the image forming apparatus according to the embodiment of the present disclosure.

### DETAILED DESCRIPTION

Hereinafter, an embodiment of the present disclosure will be described with reference to the accompanying drawings. It is noted that the following embodiment is an example of embodying the present disclosure and does not limit the technical scope of the present disclosure.

### [Configuration of Image Forming Apparatus 100]

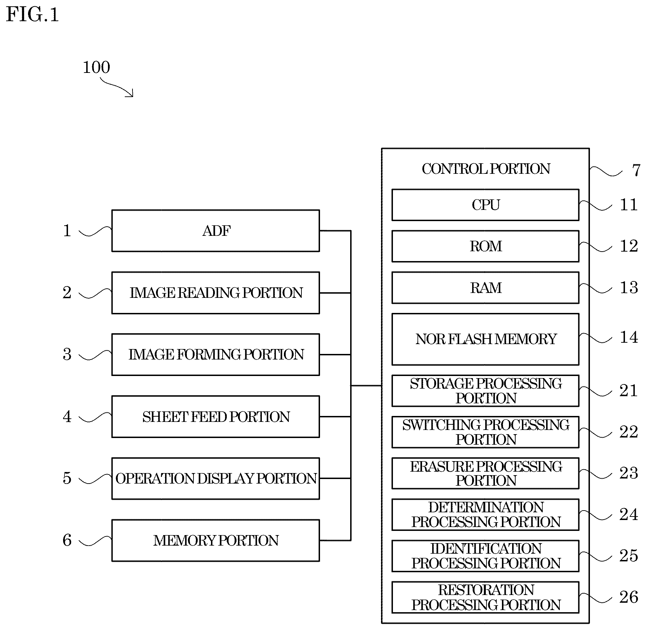

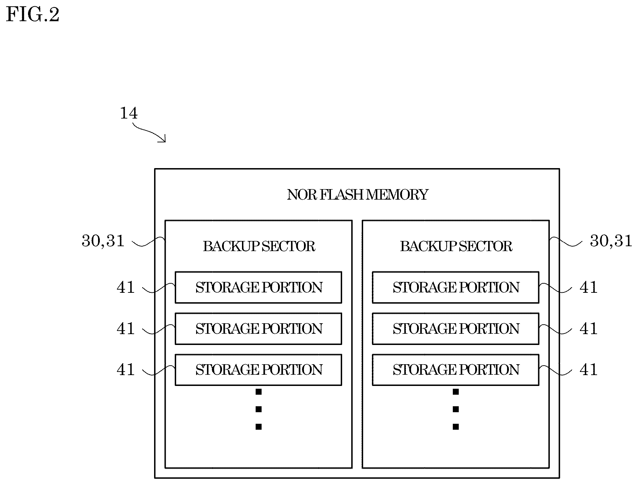

First, a configuration of an image forming apparatus 100 according to the embodiment of the present disclosure will be described with reference to FIG. 1 and FIG. 2.

The image forming apparatus 100 is a multifunction peripheral having a plurality of functions such as a facsimile function and a copy function in addition to a scan function for reading an image of a document sheet and a print function for forming an image based on image data. The image forming apparatus 100 is an example of the electronic apparatus of the present disclosure. It is noted that the present disclosure may be applied to electronic apparatuses, such as a scanner, a printer, a facsimile machine, a copier, a television, a microwave oven, a washing machine, and a refrigerator.

As shown in FIG. 1, the image forming apparatus 100 includes an auto document feeder (ADF) 1, an image reading portion 2, an image forming portion 3, a sheet feed portion 4, an operation display portion 5, a memory portion 6, and a control portion 7.

The ADF 1 conveys a document sheet whose image is read by the image reading portion 2. The ADF 1 includes a document sheet loading portion, a plurality of conveying rollers, a document sheet holder, and a sheet discharge portion.

The image reading portion 2 implements the scan function. The image reading portion 2 includes a document sheet table, a light source, a plurality of mirrors, an optical lens, and a charge coupled device (CCD). The image reading portion 2 reads an image from a document sheet conveyed by the ADF 1 and outputs image data including the read image. In addition, the image reading portion 2 reads an image from a document sheet placed on the document sheet table and outputs image data including the read image.

The image forming portion 3 implements the print function. Specifically, the image forming portion 3 forms an image on a sheet supplied by the sheet feed portion 4, using an electrophotographic method. For example, the image forming portion 3 includes a plurality of image forming units, a laser scanning unit, an intermediate transfer belt, a secondary transfer roller, a fixing device, and a sheet discharge tray. It is noted that the image forming portion 3 may form an image on a sheet supplied by the sheet feed portion 4, using another image forming method such as an inkjet method.

The sheet feed portion 4 supplies a sheet to the image forming portion 3. The sheet feed portion 4 includes a sheet feed cassette and a plurality of conveying rollers.

The operation display portion 5 is a user interface of the image forming apparatus 100. The operation display portion 5 includes a display portion and an operation portion. The display portion displays various types of information in response to control instructions from the control portion 7. Specifically, the display portion is a display device such as a liquid crystal display. The operation portion inputs various types of information to the control portion 7 in response to user operations. Specifically, the operation portion is an operation device including an operation key and a touch panel.

The memory portion 6 is a nonvolatile memory device. For example, the memory portion 6 is a solid state drive (SSD) or a hard disk drive (HDD).

The control portion 7 performs overall control of the image forming apparatus 100. As shown in FIG. 1, the control portion 7 includes a CPU 11, a ROM 12, a RAM 13, and a NOR flash memory 14. The CPU 11 is a processor that executes various types of arithmetic processing. The ROM 12 is a nonvolatile storage device in which information such as control programs for causing the CPU 11 to execute various types of processing are stored in advance. The RAM 13 is a volatile storage device used as a temporary storage memory (work area) for various types of processing executed by the CPU 11. The NOR flash memory 14 is a nonvolatile storage device. The NOR flash memory 14 includes a plurality of sectors 30 (see FIG. 2). The sector 30 is a minimum unit of data erasure and is also referred to as a block. In the control portion 7, various control programs stored in the ROM 12 in advance are executed by the CPU 11. The control portion 7 thereby performs overall control of the image forming apparatus 100.

Here, the RAM 13 stores count data. For example, the count data is data indicating the cumulative number of printed sheets of the image forming apparatus 100. In this case, the count data is incremented each time a sheet on which an image has been formed by the image forming apparatus 100 is output. In addition, the count data is used to determine whether or not a replacement timing of a component of the image forming portion 3 has arrived. The count data is an example of the control data according to the present disclosure. In addition, the RAM 13 is an example of the volatile memory portion according to the present disclosure. It is noted that the count data may be data indicating the cumulative operation time of the image forming apparatus 100. In addition, the control data of the present disclosure is not limited to the above-described count data; it may be any data used to control the image forming apparatus 100.

In addition, the NOR flash memory 14 is used to back up the count data. The NOR flash memory 14 is an example of the flash memory according to the present disclosure.

Specifically, the NOR flash memory 14 includes two backup sectors 31 (see FIG. 2). Among the plurality of sectors 30, two predetermined sectors 30 are the two backup sectors 31. The backup sector 31 is an example of the predetermined sector according to the present disclosure.

As shown in FIG. 2, each backup sector 31 includes a plurality of storage portions 41. Each of the storage portions 41 is a storage area used to store backup data to be described later.

### [Functional Configuration of Control Portion 7]

Next, a functional configuration of the control portion 7 will be described with reference to FIG. 1 and FIG. 2.

As shown in FIG. 1, the control portion 7 includes a storage processing portion 21, a switching processing portion 22, an erasure processing portion 23, a determination processing portion 24, an identification processing portion 25, and a restoration processing portion 26.

Specifically, the ROM 12 of the control portion 7 stores in advance operation control programs for causing the CPU 11 to function as the respective processing portions described above. By executing the operation control programs stored in the ROM 12, the CPU 11 functions as the respective processing portions described above.

It is noted that the operation control programs may be recorded on a computer-readable recording medium such as a CD, a DVD, or a flash memory, and may be read from the recording medium and stored in a nonvolatile storage device such as the memory portion 6. In addition, some or all of the processing portions included in the control portion 7 may be constituted by electronic circuits. In addition, the operation control programs may be programs for causing a plurality of processors to function as the processing portions included in the control portion 7.

The storage processing portion 21 stores backup data including the count data read from the RAM 13 in an unused storage portion 41 among the plurality of storage portions 41 provided in the backup sector 31 of the NOR flash memory 14 every time a predetermined backup timing arrives. The unused storage portion 41 is a storage portion 41 into which data can be written (where data is not written).

For example, the backup timing is a timing at which the count data is incremented. It is noted that the backup timing may be a timing that arrives at a predetermined cycle.

For example, the backup data includes the count data read from the RAM 13 and an error detection code. For example, the error detection code is a checksum. The backup data is generated based on the count data read out from the RAM 13 when the backup timing arrives. It is noted that the error detection code is not limited to the checksum.

For example, the storage processing portion 21 stores the backup data in an unused storage portion 41 in a preset specific sector of the two backup sectors 31. The specific sector is identified by the identification processing portion 25.

For example, the storage processing portion 21 stores the backup data in a storage portion 41 having the smallest address among the unused storage portions 41 included in the specific sector. It is noted that the storage processing portion 21 may store the backup data in a storage portion 41 having the largest address among the unused storage portions 41 included in the specific sector.

When all of the storage portions 41 in the specific sector are used storage portions 41, the switching processing portion 22 switches the specific sector to one of the two backup sectors 31 that is not the specific sector. The used storage portion 41 is a storage portion 41 into which data cannot be written (where data is written).

When all of the storage portions 41 in the backup sector 31 are used storage portions 41, the erasure processing portion 23 erases the data in the backup sector 31. Thus, in the NOR flash memory 14 in which data cannot be overwritten, the backup sector 31 can be repeatedly used as a storage location for the backup data.

For example, immediately after the first storage of the backup data after the specific sector is switched by the switching processing portion 22, the erasure processing portion 23 erases the data in the backup sector 31 including no unused storage portion 41. Thus, one of the two backup sectors 31 is almost always in an unused state (a state of including no used storage portion 41), as compared with a configuration in which a time interval is provided between the first storage of the backup data after the specific sector is switched by the switching processing portion 22 and the data erasure. Therefore, the specific sector can be identified based on the state of each of the backup sectors 31. Further, as compared with a configuration in which the data is erased before the first storage of the backup data after the specific sector is switched by the switching processing portion 22, one or more backup data can always be left in the NOR flash memory 14.

When the power supply to the RAM 13 is started, the restoration processing portion 26 restores the count data lost when the power supply to the RAM 13 was stopped immediately before, based on the data read out from the specific sector.

By the way, in the image forming apparatus 100, when power supply to the image forming apparatus 100 is suddenly stopped due to a power failure or the like, data read out from the sector 30 may become unstable. When data read out from the specific sector is different from the original data and the count data is restored based on the data, there is a possibility that control different from the original control is executed in the image forming apparatus 100.

On the other hand, a configuration is conceivable in which, when data is read from the specific sector a plurality of times to determine whether or not the data read from the specific sector is invariant, and it is determined that the data read from the specific sector is not invariant (unstable), the restoration of the count data is halted and the operation of the apparatus is stopped.

However, in the above-described configuration, opportunities to restore the count data are excessively lost.

On the other hand, in the image forming apparatus 100 according to the embodiment of the present disclosure, as will be described below, the execution of control different from the original control can be suppressed, and the excessive loss of opportunities to restore the count data can be suppressed.

When the power supply to the RAM 13 is started, the determination processing portion 24 determines, for each storage portion 41 included in the two backup sectors 31, whether the data read from the storage portion 41 is invariant.

For example, when two data read from the storage portion 41 at different times match each other, the determination processing portion 24 determines that the data read from the storage portion 41 is invariant.

It is noted that the determination processing portion 24 may determine that the data read from the storage portion 41 is invariant when three or more data read from the storage portion 41 at different times match one another.

The identification processing portion 25 identifies the specific sector, based on the data of the backup sector 31 including no storage portion 41 (hereinafter, sometimes referred to as "abnormal storage portion") for which read data has been determined not to be invariant by the determination processing portion 24.

Specifically, based on the data read from the backup sector 31 including no abnormal storage portion, the identification processing portion 25 determines whether or not the backup sector 31 is in the unused state. It is noted that the identification processing portion 25 may determine that a backup sector 31 including no abnormal storage portion is in the unused state when the data read from the backup sector 31 consists of only "1".

When the backup sector 31 including no abnormal storage portion is in the unused state, the identification processing portion 25 determines that a backup sector 31 different from that backup sector 31 is the specific sector. In addition, when the backup sector 31 including no abnormal storage portion is not in the unused state, the identification processing portion 25 determines that that backup sector 31 is the specific sector.

In the image forming apparatus 100, identification information for identifying the specific sector may be stored in a nonvolatile memory portion different from the NOR flash memory 14, such as the memory portion 6. In this case, the storage processing portion 21, the switching processing portion 22, the erasure processing portion 23, and the restoration processing portion 26 may identify the specific sector based on the identification information. In addition, the determination processing portion 24 may determine, for each of the storage portions 41 included in the specific sector identified based on the identification information, whether or not data read from the storage portion 41 is invariant. In addition, the control portion 7 may not include the identification processing portion 25.

The restoration processing portion 26 restores the count data lost when the power supply to the RAM 13 was stopped immediately before, based on data which is read from any of the storage portions 41 (hereinafter, may be referred to as a "normal storage portion") for which read data has been determined to be invariant by the determination processing portion 24 among the storage portions 41 included in the specific sector, and in which no error is detected based on the error detection code.

For example, the restoration processing portion 26 determines the presence or absence of an error for each data read from the normal storage portion, based on a portion corresponding to the error detection code included in the data. Then, the restoration processing portion 26 restores the count data, based on data in which the value of the portion corresponding to the count data is different from a specific value and is the maximum among the data determined to have no error. The specific value is a value of a portion corresponding to the count data among the data read from the unused storage portion 41. It is noted that the restoration processing portion 26 may restore the count data based on the data with the largest address of the reading source storage portion 41 among the data determined to have no error.

It is noted that the backup data may not include the error detection code. In this case, the restoration processing portion 26 may restore the count data lost when the power supply to the RAM 13 was stopped immediately before, based on data read from any of the normal storage portions among the storage portions 41 included in the specific sector.

### [Backup Control Processing]

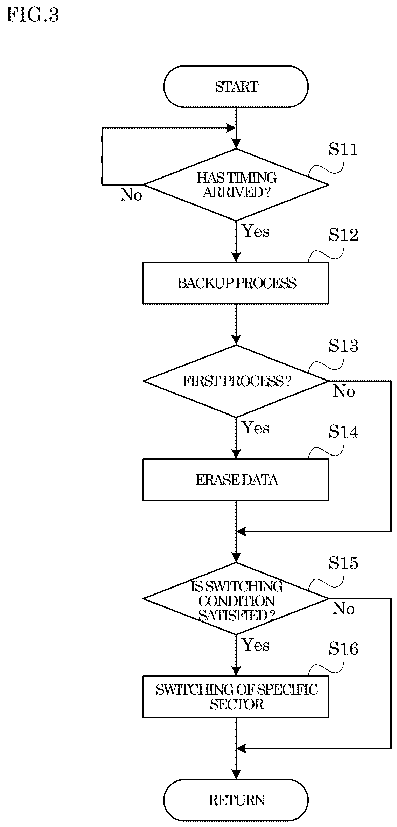

An example of the procedure of backup control processing executed by the control portion 7 in the image forming apparatus 100 will be described below with reference to FIG. 3. Here, steps S11, S12, ... represent the numbers of the processing procedure (steps) executed by the control portion 7.

### <Step S11>

First, in step S11, the control portion 7 determines whether or not the backup timing has arrived.

Here, when it is determined that the backup timing has arrived (Yes in S11), the control portion 7 shifts the processing to step S12. When the backup timing has not arrived (No in S11), the control portion 7 waits for the arrival of the backup timing in step S11.

### <Step S12>

In step S12, the control portion 7 executes a backup process of backing up the count data stored in the RAM 13. The process of step S12 is executed by the storage processing portion 21 of the control portion 7.

Specifically, the control portion 7 reads the count data from the RAM 13. In addition, the control portion 7 generates the backup data based on the read count data. Then, the control portion 7 stores the generated backup data in the storage portion 41 having the smallest address among one or more unused storage portions 41 included in the specific sector of the NOR flash memory 14. It is noted that the specific sector is identified in advance when the power supply to the control portion 7 is started (see step S32 to be described later).

### <Step S13>

In step S13, the control portion 7 determines whether or not the process of step S12 is the first process after the specific sector is switched.

Here, when it is determined that the process of step S12 is the first process after the specific sector is switched (Yes in S13), the control portion 7 shifts the processing to step S14. When the process of step S12 is not the first process after the specific sector is switched (No in S13), the control portion 7 shifts the processing to step S15.

### <Step S14>

In step S14, the control portion 7 erases the data in the backup sector 31 including no unused storage portion 41. The process of step S14 is executed by the erasure processing portion 23 of the control portion 7.

### <Step S15>

In step S15, the control portion 7 determines whether or not a switching condition of the specific sector is satisfied.

Specifically, the control portion 7 determines that the switching condition is satisfied when all of the storage portions 41 in the specific sector are used storage portions 41.

Here, when it is determined that the switching condition is satisfied (Yes in S15), the control portion 7 shifts the processing to step S16. When the switching condition is not satisfied (No in S15), the control portion 7 shifts the processing to step S11.

<Step S16>

In step S16, the control portion 7 switches the specific sector to one of the two backup sectors 31 which is not the specific sector. The process of step S16 is executed by the switching processing portion 22 of the control portion 7.

### [Data Restoration Processing]

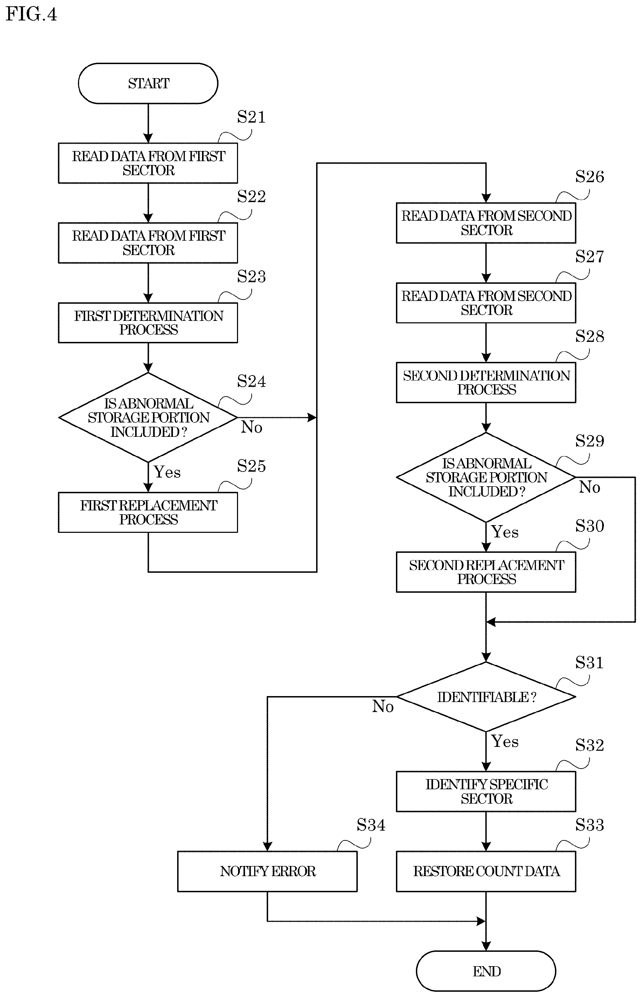

Next, with reference to FIG. 4, a data restoration method of the present disclosure will be described together with an example of the procedure of data restoration processing executed by the control portion 7 in the image forming apparatus 100. The data restoration processing is executed when power supply to the control portion 7 is started.

### <Step S21>

First, in step S21, the control portion 7 reads data from one of the two backup sectors 31 (hereinafter, sometimes referred to as a "first sector").

### <Step S22>

In step S22, the control portion 7 reads data from the first sector.

### <Step S23>

In step S23, the control portion 7 executes a first determination process of determining, for each storage portion 41 included in the first sector, whether or not data read from the storage portion 41 is invariant, based on the data acquired in the process of step S21 and the data acquired in the process of step S22. The process of step S23 is an example of the determination step of the present disclosure, and is executed by the determination processing portion 24 of the control portion 7.

In the first determination process, when two data read from one of the storage portions 41 included in the first sector match with each other, it is determined that the data read from the storage portion 41 is invariant.

### <Step S24>

In step S24, the control portion 7 determines whether or not the first sector includes an abnormal storage portion based on the execution result of the first determination process.

Here, when it is determined that the first sector includes an abnormal storage portion (Yes in S24), the control portion 7 shifts the processing to step S25. When the first sector does not include an abnormal storage portion (No in S24), the control portion 7 shifts the processing to step S26.

It is noted that, when it is determined that the first sector includes an abnormal storage portion (Yes in S24), the control portion 7 may shift the processing to step S22 instead of shifting the processing to step S25, until the number of times of determination that the first sector includes an abnormal storage portion reaches a predetermined number of times.

### <Step S25>

In step S25, the control portion 7 executes a first replacement process of replacing the data read from the abnormal storage portion among the data acquired in the process of step S21 with data consisting of only "0". This makes it possible to identify the data read from the abnormal storage portion among the data acquired in the process of step S21.

### <Step S26>

In step S26, the control portion 7 reads data from one of the two backup sectors 31 which is different from the first sector (hereinafter, sometimes referred to as a "second sector").

### <Step S27>

In step S27, the control portion 7 reads data from the second sector.

### <Step S28>

In step S28, the control portion 7 executes a second determination process of determining, for each storage portion 41 included in the second sector, whether or not data read from the storage portion 41 is invariant, based on the data acquired in the process of step S26 and the data acquired in the process of step S27. The process of step S28 is an example of the determination step of the present disclosure, and is executed by the determination processing portion 24 of the control portion 7.

In the second determination process, when two data read from one of the storage portions 41 included in the second sector match with each other, it is determined that the data read from the storage portion 41 is invariant.

### <Step S29>

In step S29, the control portion 7 determines whether or not the second sector includes an abnormal storage portion based on the execution result of the second determination process.

Here, when it is determined that the second sector includes an abnormal storage portion (Yes in S29), the control portion 7 shifts the processing to step S30. When the second sector does not include an abnormal storage portion (No in S29), the control portion 7 shifts the processing to step S31.

It is noted that, when it is determined that the second sector includes an abnormal storage portion (Yes in S29), the control portion 7 may shift the processing to step S27 instead of shifting the processing to step S30, until the number of times of determination that the second sector includes an abnormal storage portion reaches a predetermined number of times.

### <Step S30>

In step S30, the control portion 7 executes a second replacement process of replacing the data read from the abnormal storage portion among the data acquired in the process of step S26 with data consisting of only "0". This makes it possible to identify the data read from the abnormal storage portion among the data acquired in the process of step S26.

### <Step S31>

In step S31, the control portion 7 determines whether or not the specific sector can be identified.

Specifically, the control portion 7 determines that the specific sector can be identified when one or both of the first sector and the second sector includes no abnormal storage portion. In addition, when both of the first sector and the second sector include an abnormal storage portion, the control portion 7 determines that the specific sector cannot be identified.

Here, when it is determined that the specific sector can be identified (Yes in S31), the control portion 7 shifts the processing to step S32. In addition, when the specific sector cannot be identified (No in S31), the control portion 7 shifts the processing to step S34.

### <Step S32>

In step S32, the control portion 7 identifies the specific sector. The process of step S32 is executed by the identification processing portion 25 of the control portion 7.

Specifically, when the first sector includes no abnormal storage portion, the control portion 7 determines whether or not the first sector is in the unused state based on the data acquired in the process of step S21. When the first sector is in the unused state, the control portion 7 determines that the second sector is the specific sector. In addition, when the first sector is not in the unused state, the control portion 7 determines that the first sector is the specific sector.

In addition, when the second sector includes no abnormal storage portion, the control portion 7 determines whether or not the second sector is in the unused state based on the data acquired in the process of step S26. When the second sector is in the unused state, the control portion 7 determines that the first sector is the specific sector. In addition, when the second sector is not in the unused state, the control portion 7 determines that the second sector is the specific sector.

In addition, the control portion 7 stores the identification result of the specific sector in a predetermined storage area of the RAM 13. This makes it possible for the storage processing portion 21, the switching processing portion 22, the erasure processing portion 23, and the restoration processing portion 26 to recognize the specific sector.

### <Step S33>

In step S33, the control portion 7 restores the count data lost when the power supply to the RAM 13 was stopped immediately before, based on the data read from the specific sector.

Specifically, when the first sector is the specific sector, the control portion 7 determines the presence or absence of an error for each data read from the normal storage portion among the data acquired in the process of step S21, based on the portion corresponding to the error detection code included in the data. Then, the control portion 7 restores the count data based on the data in which the value of the portion corresponding to the count data is different from the specific value and is the maximum among the data determined to have no error.

In addition, when the second sector is the specific sector, the control portion 7 determines the presence or absence of an error for each data read from the normal storage portion among the data acquired in the process of step S26, based on the portion corresponding to the error detection code included in the data. Then, the control portion 7 restores the count data based on the data in which the value of the portion corresponding to the count data is different from the specific value and is the maximum among the data determined to have no error.

### <Step S34>

In step S34, the control portion 7 notifies the occurrence of an error and stops the operation of the apparatus.

Specifically, the control portion 7 causes the operation display portion 5 to display an error screen including a message indicating that an error has occurred.

As described above, in the image forming apparatus 100, when the power supply to the RAM 13 is started, it is determined, for each of the storage portions 41 included in the specific sector, whether or not the data read from the storage portion 41 is invariant. Then, based on the data which is read from any of the normal storage portions among the storage portions 41 included in the specific sector and for which no error is detected based on the error detection code, the count data lost when the power supply to the RAM 13 was stopped immediately before is restored. Thus, it is possible to suppress the execution of control different from the original control. In addition, compared with the configuration in which the restoration of the count data is stopped and the operation of the apparatus is stopped when the data read from the specific sector is not invariant, it is possible to prevent the excessive loss of opportunities to restore the count data.

It is noted that the NOR flash memory 14 may include only one backup sector 31.

In this case, the control portion 7 may not include the switching processing portion 22.

In addition, when the backup timing arrives and all of the storage portions 41 in the backup sector 31 are used storage portions 41, the erasure processing portion 23 may erase the data in the backup sector 31 before the storage processing portion 21 stores the backup data.

In addition, when the power supply to the RAM 13 is started, the determination processing portion 24 may determine, for each storage portion 41 included in the backup sector 31, whether or not the data read from the storage portion 41 is invariant.

In addition, three or more backup sectors 31 may be included in the NOR flash memory 14.

In addition, the memory portion 6 may be a flash memory. In this case, the flash memory of the present disclosure may be the memory portion 6.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An electronic apparatus (100) comprising:
a storage processing portion (21) configured to store backup data including control data read from a volatile memory portion (13) in an unused storage portion (41) among a plurality of storage portions (41) provided in a predetermined sector (31) of a flash memory (14) each time a predetermined backup timing arrives;
an erasure processing portion (23) configured to erase data in the sector (31) when all of the storage portions (41) in the sector (31) are used storage portions (41);
a determination processing portion (24) configured to determine, for each of the storage portions (41), whether data read from the storage portion (41) is invariant when power supply to the memory portion (13) is started; and
a restoration processing portion (26) configured to restore the control data which was lost when the power supply to the memory portion (13) was stopped immediately before, based on data read from any of the storage portions (41) for which read data has been determined to be invariant by the determination processing portion (24).

2. The electronic apparatus (100) according to claim 1, wherein
the storage processing portion (21) stores the backup data in an unused storage portion (41) in a predetermined specific sector among a plurality of the sectors (31),
the electronic apparatus (100) includes:
a switching processing portion (22) configured to switch the specific sector to another sector (31) of the sectors (31) when all of the storage portions (41) in the specific sector are used storage portions (41), and
the erasure processing portion (23) erases data in the sector (31) that includes no unused storage portion (41) after first storage of the backup data after the specific sector is switched by the switching processing portion (22).

3. The electronic apparatus (100) according to claim 2, wherein
the specific sector is one of the two sectors (31),
the erasure processing portion (23) erases the data in the sector (31) that includes no unused storage portion (41) immediately after first storage of the backup data after the specific sector is switched by the switching processing portion (22),
the determination processing portion (24) determines, for each of the storage portions (41) included in the two sectors (31), whether or not data read from the storage portion (41) is invariant, and
the electronic apparatus (100) includes:
an identification processing portion (25) configured to identify the specific sector based on data of the sector (31) that includes no storage portion (41) for which read data has been determined not to be invariant by the determination processing portion (24).

4. The electronic apparatus (100) according to any one of claim 1 to 3, wherein
the backup data includes the control data and an error detection code, and
the restoration processing portion (26) restores the control data which was lost when the power supply to the memory portion (13) was stopped immediately before, based on data which is read from any of the storage portions (41) for which read data has been determined to be invariant by the determination processing portion (24) and for which no error is detected based on the error detection code.

5. A data restoration method executed by an electronic apparatus (100) including: a storage processing portion (21) configured to store backup data including control data read from a volatile memory portion (13) in an unused storage portion (41) among a plurality of storage portions (41) provided in a predetermined sector (31) of a flash memory (14) each time a predetermined backup timing arrives; and an erasure processing portion (23) configured to erase data in the sector (31) when all of the storage portions (41) in the sector (31) are used storage portions (41), the method comprising:
a determination step of determining, for each of the storage portions (41), whether data read from the storage portion (41) is invariant when power supply to the memory portion (13) is started; and
a restoration step of restoring the control data which was lost when the power supply to the memory portion (13) was stopped immediately before, based on data read from any of the storage portions (41) for which read data has been determined to be invariant in the determination step.
